# EUROPEAN PATENT SPECIFICATION

(11) **EP 4 203 095 B1**
(45) Date of publication and mention of the grant of the patent: **23.10.2024**
(21) Application number: 22828707.4
(22) Date of filing: 21.06.2022
(51) Int. Cl.: H01M 4/134, H01M 4/62, H01M 10/42, H01M 4/1395, H01M 10/052, H01M 4/04, H01M 4/13, H01M 4/38, H01M 4/02

(54) **ANODE FOR LITHIUM SECONDARY BATTERY, MANUFACTURING METHOD THEREFOR, AND LITHIUM SECONDARY BATTERY COMPRISING SAME**
ANODE FÜR LITHIUMSEKUNDÄRBATTERIE, HERSTELLUNGSVERFAHREN DAFÜR UND LITHIUMSEKUNDÄRBATTERIE DAMIT
ANODE POUR BATTERIE SECONDAIRE AU LITHIUM, SON PROCÉDÉ DE FABRICATION, ET BATTERIE SECONDAIRE AU LITHIUM LA COMPRENANT

(30) Priority: 21.06.2021 KR 20210079872
(43) Date of publication of application: 28.06.2023
(73) Proprietor: LG Energy Solution, Ltd., Seoul 07335 (KR)
(72) Inventor: HAN, Dong Hyeop, Daejeon 34122 (KR); KIM, Yunjung, Daejeon 34122 (KR); KIM, Yun Kyoung, Daejeon 34122 (KR); LEE, Jaegil, Daejeon 34122 (KR)
(74) Representative: Goddar, Heinz J.
(86) International application number: PCT/KR2022/008754
(87) International publication number: WO 2022/270860

(56) References cited:
- EP-A1- 3 136 475
- WO-A2-02/095849
- KR-A- 20040 007 597
- KR-A- 20090 040 442
- KR-A- 20140 000 233
- KR-A- 20170 026 098
- KR-A- 20180 016 344
- CHUNPENG YANG ET AL: "Protected Lithium-Metal Anodes in Batteries: From Liquid to Solid", ADVANCED MATERIALS, VCH PUBLISHERS, DE, vol. 29, no. 36, 24 July 2017 (2017-07-24), pages n/a, XP071871194, ISSN: 0935-9648, DOI: 10.1002/ADMA.201701169

## Description

### Field of Disclosure

The present disclosure relates to a negative electrode for a lithium secondary battery, a method of manufacturing the same, and a lithium secondary battery comprising the same.

### Background

Recently, as the miniaturization and weight reduction of electronic products, electronic devices, communication devices and the like are rapidly progressing and the need for electric vehicles has been greatly increased in relation to environmental problems, there is a growing demand for performance improvements in secondary batteries used as energy sources for these products. Among them, the lithium secondary battery has been attracting considerable attention as a high-performance battery because of its high energy density and high standard electrode potential characteristics.

In particular, the lithium-sulfur (Li-S) battery is a secondary battery using a sulfur-based material having a sulfur-sulfur bond (S-S bond) as a positive electrode active material and using lithium metal as a negative electrode active material. There is an advantage that sulfur, which is the main material of the positive electrode active material, is very rich in resources, is not toxic, and has a low atomic weight. In addition, theoretical discharging capacity of the lithium-sulfur secondary battery is 1,675 mAh/g-sulfur, and its theoretical energy density is 2,600 Wh/kg. Since the theoretical energy density of the lithium-sulfur secondary battery is much higher than the theoretical energy density of other battery systems currently under study (Ni-MH battery: 450 Wh/kg, Li-FeS battery: 480 Wh/kg, Li-MnO₂ battery: 1,000 Wh/kg, Na-S battery: 800 Wh/kg), the lithium-sulfur secondary battery is the most promising battery among the batteries developed so far.

During the discharging of the lithium-sulfur secondary battery, an oxidation reaction of lithium occurs at the negative electrode and a reduction reaction of sulfur occurs at the positive electrode. Sulfur before discharging has an annular S₈ structure. During the reduction reaction (discharging), as the S-S bond is cut off, the oxidation number of S decreases, and during the oxidation reaction (charging), as the S-S bond is re-formed, electrical energy is stored and generated using an oxidation-reduction reaction in which the oxidation number of S increases. During this reaction, the sulfur is converted from the annular S₈ structure to the lithium polysulfide (Li₂Sₓ, x = 8, 6, 4, 2) by the reduction reaction and eventually, when the lithium polysulfide is completely reduced, lithium sulfide (Li₂S) is finally produced. By the process of reducing to each lithium polysulfide, the discharging behavior of the lithium-sulfur secondary battery is characterized by a step-wise discharge voltage unlike lithium-ion battery.

In addition, lithium sulfide generated at the positive electrode may cause deterioration of the performance of the battery through shuttling to the negative electrode. In order to prevent the shuttling phenomenon of lithium sulfide, a stable Solid Electrolyte Interphase (SEI) should be formed in the lithium negative electrode. The SEI may be formed by reacting lithium metal with a salt and an additive contained in the electrolyte.

However, there is a problem that the salt and the additive in the electrolyte that participate in the formation of the SEI are continuously consumed to deteriorate the performance of the battery, and overvoltage occurs when input in an excessive amount, thereby reducing the rate characteristics. Therefore, in order to stably form and maintain the SEI capable of preventing the shuttling phenomenon of lithium sulfide, it is preferable that the consumption of the salt and the additive contained in the electrolyte is minimized.

Korean Laid-open Patent Publication No. 2004-0026370 discloses a lithium negative electrode in which the lifetime characteristics of a battery are improved by improving lithium ion conductivity in the lithium negative electrode. The lithium negative electrode includes an organic protective layer on both surfaces of the lithium metal layer formed on the current collector. The organic protective layer has a configuration comprising a polymer and a lithium salt, so that the lithium ion conductivity of the lithium negative electrode can be improved, and thus the lifespan characteristics of the battery can be improved. However, there is a problem that the organic protective layer on both surfaces of the lithium metal layer only serves to improve lithium-ion conductivity, but does not perform the role of replenishing the lithium salt or the additive in the electrolyte consumed as the charging/discharging is proceeded.

Accordingly, it is necessary to develop a lithium negative electrode capable of replenishing an electrolyte material that can react with lithium to form SEI in order to improve the lifetime characteristics of the battery.

### Related Art

Korean Patent Publication No. 2004-0026370

Advanced Materials, Vol. 29, No. 36, discloses protected lithium-metal anodes in batteries.

WO 02/095849 A2 discloses lithium anodes for electrochemical cells, the anode comprising an anode active layer comprising lithium metal co-deposited in-situ with one or more gaseous materials, and a substrate.

EP 3 136 475 A1 discloses a lithium metal battery, comprising a lithium metal anode, a protective layer disposed on the lithium metal anode, the protective layer comprising a polymer and at least one metal salt and a nitrogen-containing additive, a cathode, and a liquid electrolyte comprising an organic solvent, wherein the metal salt and the nitrogen-containing additive is insoluble in the organic solvent of the liquid electrolyte.

### Summary

### Technical Problem

The inventors of the present disclosure conducted researches in various ways to solve the above problems, and as a result, have confirmed that when a negative electrode, in which a salt coating layer containing lithium salt and an additive is formed between a plurality of lithium thin films, is applied to a lithium secondary battery, the salt and the additive in the electrolyte consumed during the operation of the battery can be replenished from the salt and the additive in the salt coating layer, and thus the lifetime characteristics of the battery can be improved.

Therefore, it is an object of the present disclosure to provide a negative electrode for a lithium secondary battery, the negative electrode comprising a material capable of replenishing the electrolyte consumed during the operation of the lithium secondary battery and a method of manufacturing the same.

It is another object of the present disclosure to provide a lithium secondary battery comprising the negative electrode for the lithium secondary battery.

### Technical Solution

In order to achieve the above objects, the present disclosure provides a negative electrode for a lithium secondary battery, the negative electrode comprising a plurality of lithium thin films and a salt coating layer formed between the plurality of lithium thin films,
wherein the salt coating layer comprises a lithium salt and an additive,
wherein the lithium salt comprises one or more selected from the group consisting of LiN(C₂F₅SO₂)₂ (Lithium bis(perfluoroethylsulfonyl)imide, LiBETI), LiN (C₂F₅SO₃)₂, LiN(FSO₂)₂(Lithium bis(fluorosulfonyl)imide, LiFSI), LiN(CF₃SO₂)₂(Lithium bis(trifluoromethanesulfonyl)imide, LiTFSI), LiPF₆, LiClO₄, LiAsF₆, LiBF₄, LiSbF₆, LiAlO₄, LiAlCl₄, LiCF₃SO₃, and LiC₄F₉SO₃,
wherein the additive comprises one or more selected from the group consisting of an inorganic nitric acid compound and an organic nitric acid compound,
wherein the inorganic nitric acid compound includes one or more selected from the group consisting of lithium nitrate (LiNO₃) and lithium nitrite (LiNO₂), and
wherein the organic nitric acid compound includes one or more selected from the group consisting of nitromethane (CH₃NO₂) and methyl nitrate (CH₃NO₃).

In addition, the present disclosure provides a method for manufacturing a negative electrode for a lithium secondary battery, the method comprising: (S1) forming a salt coating layer on one surface of a lithium thin film; (S2) laminating a plurality of the lithium thin films on which the salt coating layer is formed in step (S1) to form a laminate; and (S3) laminating another lithium thin film on the salt coating layer that is exposed at the outermost layer of the laminate obtained in step (S2),
wherein the salt coating layer comprises a lithium salt and an additive,
wherein the lithium salt comprises one or more selected from the group consisting of LiN(C₂F₅SO₂)₂(Lithium bis(perfluoroethylsulfonyl)imide, LiBETI), LiN (C₂F₅SO₃)₂, LiN(FSO₂)₂(Lithium bis(fluorosulfonyl)imide, LiFSI), LiN(CF₃SO₂)₂(Lithium bis(trifluoromethanesulfonyl)imide, LiTFSI), LiPF₆, LiClO₄, LiAsF₆, LiBF₄, LiSbF₆, LiAlO₄, LiAlCl₄, LiCF₃SO₃, and LiC₄F₉SO₃,
wherein the additive comprises one or more selected from the group consisting of an inorganic nitric acid compound and an organic nitric acid compound,
wherein the inorganic nitric acid compound includes one or more selected from the group consisting of lithium nitrate (LiNO₃) and lithium nitrite (LiNO₂), and
wherein the organic nitric acid compound includes one or more selected from the group consisting of nitromethane (CH₃NO₂) and methyl nitrate (CH₃NO₃).

The present disclosure also provides a lithium secondary battery comprising the negative electrode, a positive electrode, a separator between the positive electrode and the negative electrode; an electrolyte solution with which the positive electrode, the negative electrode and the separator are impregnated.

Further embodiments are disclosed in the dependent claims.

### Advantageous Effects

In the negative electrode for the lithium secondary battery according to the present disclosure, the SEI may be stably formed on the negative electrode by the lithium salt and the additive contained in the electrolyte at the initial stage of the operation of the battery. In addition, in the negative electrode for the lithium secondary battery, since the salt coating layer including the lithium salt and the additive is formed between the plurality of lithium thin films, when the lithium salt and the additive contained in the electrolyte are consumed as the operation of the battery is proceeded, the lithium salt and the additive in the electrolyte can be replenished from the lithium salt and the additive in the salt coating layer, so that the SEI may be stably formed on the negative electrode, and thus the lifetime performance of the lithium secondary battery may be improved while maintaining high coulombic efficiency.

In addition, when the negative electrode is applied to a lithium-sulfur secondary battery, the SEI can be stably formed and maintained on the lithium negative electrode, thereby preventing the shuttle phenomenon of lithium sulfide leached from the positive electrode, and thus it is possible to delay the time at which the performance of the battery is deteriorated.

### Brief Description of Drawings

FIG. 1 shows a schematic diagram of the negative electrode for the lithium secondary battery according to an embodiment of the present disclosure, and a schematic diagram when the salt coating layer is dissolved.
FIG. 2 is a graph showing initial charging/discharging capacities for lithium-sulfur secondary batteries of Examples 1 and 2 and Comparative Example 1.
FIG. 3 is a graph showing lifetime characteristics for lithium-sulfur secondary batteries of Examples 1 and 2 and Comparative Example 1.

### Detailed Description

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

### Negative electrode for lithium secondary battery

The present disclosure relates to a negative electrode for a lithium secondary battery.

The negative electrode for the lithium secondary battery according to the present disclosure comprises a plurality of lithium thin films and salt coating layers formed between each of the plurality of lithium thin films. In addition, if necessary, one lithium thin film among the plurality of lithium thin films may be formed on a negative electrode current collector. In this case, the number of the plurality is n, and n may be an integer of 2 to 4. If the number of the plurality of the lithium thin films is less than 2, a structure in which a salt coating layer is formed between lithium thin films cannot be obtained, and if the number of the plurality of the lithium thin films exceeds 4, the thickness of the negative electrode may become excessively thick and thus energy density may be decreased.

In addition, as the charging/discharging is proceeded, the lithium thin film may become porous in which pores are formed by the electrodeposition and desorption of lithium.

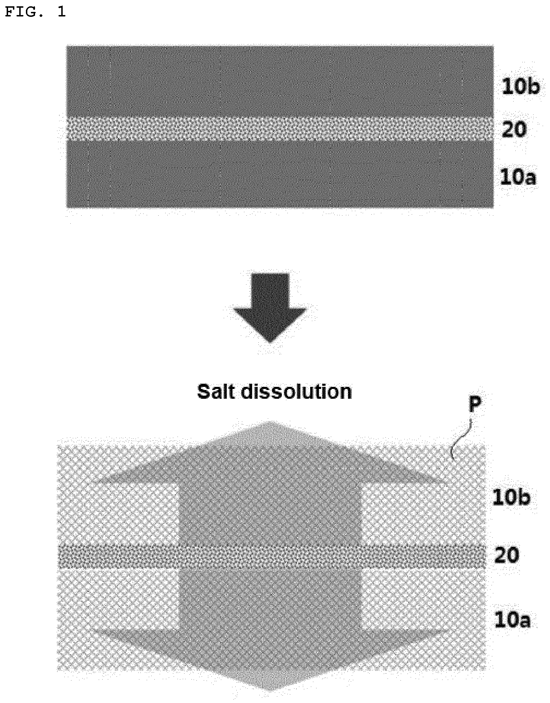

FIG. 1 shows a schematic diagram of the negative electrode for the lithium secondary battery according to an embodiment of the present disclosure, and a schematic diagram when the salt coating layer is dissolved.

Referring to FIG. 1, the negative electrode for the lithium secondary battery according to an embodiment of the present disclosure may have a salt coating layer 20 formed between lithium foils (Li foil) 10a and 10b which are two lithium thin films. As the lithium secondary battery repeats the charging/discharging, the electrodeposition and desorption of lithium are repeated, so that the lithium foils 10a and 10b become porous. When the salt coating layer 20 is exposed to the electrolyte between the pores (P) formed as the lithium foils 10a and 10b become porous, the salt coating layer 20 is dissolved, and the lithium salt and the additive contained in the salt coating layer 20 are dissolved into the electrolyte. The lithium salt and the additive dissolved into the electrolyte can react with the lithium thin film to stably form the SEI.

At the beginning of the operation of the battery, the SEI may be sufficiently stably formed only with the lithium salt and the additive contained in the electrolyte. However, as the operation of the battery is proceeded, if the lithium salt and the additive contained in the electrolyte are consumed, the lithium salt and the additive in the salt coating layer can replenish the dissolved and consumed lithium salt and additive of the electrolyte, as described above, so that the SEI can be stably formed and maintained.

If the salt coating layer is formed on the exposed surface of the lithium thin film, not between the lithium thin films, a large amount of lithium salt and the additive contained in the salt coating layer dissolves in the electrolyte at the beginning of the operation of the battery, thereby increasing the viscosity of the electrolyte and thus increasing the overvoltage.

In addition, if the salt coating layer is formed between the current collector and the lithium thin film, it can prevent the increase of the resistance of the battery and can prevent lithium from being deposited on the current collector during charging.

In the present disclosure, the salt coating layer may react with lithium to form SEI (Solid Electrolyte Interphase), and may serve to suppress shuttling of lithium polysulfide formed in the positive electrode containing sulfur to improve the lifetime of the battery. In addition, the salt coating layer may comprise materials that can replenish the lithium salt and the additive consumed in the electrolyte solution during the operation of the battery.

The salt coating layer comprises a lithium salt and an additive. Since the salt coating layer serves to replenish lithium salts and additives in the electrolyte that are consumed as the battery operates, the lithium salt and additives included in the salt coating layer may be used without limitation as long as they are lithium salts and additives that may be included in an electrolyte for a lithium secondary battery.

In addition, the salt coating layer may comprise 40 to 80 wt.% of the lithium salt and 20 to 60 wt.% of the additive.

The lithium salt comprises at least one selected from the group consisting of LiN(C₂F₅SO₂)₂(Lithium bis(perfluoroethylsulfonyl)imide, LiBETI), LiN (C₂F₅SO₃)₂, LiN(FSO₂)₂(Lithium bis(fluorosulfonyl)imide, LiFSI), LiN(CF₃SO₂)₂(Lithium bis(trifluoromethanesulfonyl)imide, LiTFSI), LiPF₆, LiClO₄, LiAsF₆, LiBF₄, LiSbF₆, LiAlO₄, LiAlCl₄, LiCF₃SO₃ and LiC₄F₉SO₃, and among them, LiBETI, LiFSI, or LiTFSI may be preferable.

In addition, the lithium salt may be contained in an amount of 40 wt.% to 80 wt.% based on the total weight of the salt coating layer. Specifically, the content of the lithium salt may be 40 wt.% or more or 50 wt.% or more, and may be 65 wt.% or less, 70 wt.% or less, or 80 wt.% or less. If the content of the lithium salt is less than 40 wt.%, since the content of the additive is relatively high, it may be difficult to prepare a uniform coating solution, and thus it may be difficult to form a salt coating layer. If the content of the lithium salt exceeds 80 wt.%, the content of the additive is relatively small, and thus it may be difficult to form an appropriate SEI protective layer.

The additive includes at least one selected from the group consisting of an inorganic nitric acid compound comprising at least one selected from lithium nitrate (LiNO₃) and lithium nitrite (LiNO₂); and an organic nitric acid compound comprising at least one of nitromethane (CH₃NO₂) and methyl nitrate (CH₃NO₃). The additive may include lithium nitrate (LiNO₃) in consideration of compatibility with lithium salt.

In addition, the additive may be contained in an amount of 20 wt% to 60 wt% based on the total weight of the salt coating layer. Specifically, the content of the additive may be 20 wt.% or more, 30 wt.% or more, or 35 wt.% or more, and 50 wt.% or less, 55 wt.% or less, or 60 wt.% or less. If the content of the additive is less than 20% by weight, it may be difficult to form an appropriate SEI protective layer. If the content of the additive is more than 60% by weight, it is difficult to prepare a uniform coating solution, and thus it may also be difficult to form a salt coating layer.

In addition, the thickness of the salt coating layer may be 100 nm to 3 *µ*m. Specifically, the thickness of the salt coating layer may be 100 nm or more, 500 nm or more or 700 nm or more, and 1 *µ*m or less, 2 *µ*m or less or 3 *µ*m or less. If the thickness of the salt coating layer is less than 100 nm, it is not possible to sufficiently replenish the salt or additive of the electrolyte consumed during the operation of the battery. If the thickness of the salt coating layer exceeds 3 *µ*m, the electrical resistance may be increased, and thus an overvoltage may be increased during operation of the battery.

In the present disclosure, the lithium thin film may serve as a negative electrode active material.

The thickness of the lithium thin film may be 10 *µ*m to 50 *µ*m, specifically, the thickness of the lithium thin film may be 10 *µ*m or more, 15 *µ*m or more or 20 *µ*m or more, and 40 *µ*m or less, 45 *µ*m or less or 50 *µ*m or less. If the thickness of the lithium thin film is less than 10 *µ*m, it may be difficult to proceed with the process of manufacturing the negative electrode using a plurality of lithium thin films. If the thickness of the lithium thin film exceeds 50 *µ*m, the thickness of the negative electrode comprising the plurality of lithium thin films becomes thick and thus the energy density may be reduced.

In the present disclosure, the negative electrode current collector is not particularly limited as long as it has conductivity without causing a chemical change in the battery. For example, the negative electrode current collector may be copper, stainless steel, aluminum, nickel, titanium, sintered carbon, or copper or stainless steel surface-treated with carbon, nickel, titanium, silver or the like, or aluminum-cadmium alloy. In addition, the negative electrode current collector may be formed in various forms such as film, sheet, foil, net, porous body, foam, or nonwoven fabric, having fine irregularities formed on its surface like the positive electrode current collector.

### Method for manufacturing negative electrode for lithium secondary battery

The present disclosure also relates to a method for manufacturing a negative electrode for a lithium secondary battery, wherein the method comprises the steps of (S1) forming a salt coating layer on one surface of a lithium thin film; (S2) laminating a plurality of the lithium thin films on which the salt coating layer is formed in step (S1) to form a laminate; and (S3) laminating another lithium thin film on the salt coating layer that is exposed at the outermost layer of the laminate obtained in step (S2), wherein the salt coating layer comprises a lithium salt and an additive,
wherein the lithium salt comprises one or more selected from the group consisting of LiN(C₂F₅SO₂)₂(Lithium bis(perfluoroethylsulfonyl)imide, LiBETI), LiN (C₂F₅SO₃)₂, LiN(FSO₂)₂(Lithium bis(fluorosulfonyl)imide, LiFSI), LiN(CF₃SO₂)₂(Lithium bis(trifluoromethanesulfonyl)imide, LiTFSI), LiPF₆, LiClO₄, LiAsF₆, LiBF₄, LiSbF₆, LiAlO₄, LiAlCl₄, LiCF₃SO₃, and LiC₄F₉SO₃,
wherein the additive comprises one or more selected from the group consisting of an inorganic nitric acid compound and an organic nitric acid compound,
wherein the inorganic nitric acid compound includes one or more selected from the group consisting of lithium nitrate (LiNO₃) and lithium nitrite (LiNO₂), and
wherein the organic nitric acid compound includes one or more selected from the group consisting of nitromethane (CH₃NO₂) and methyl nitrate (CH₃NO₃).

Hereinafter, the method of manufacturing the negative electrode for the lithium secondary battery according to the present disclosure will be described in detail for each step.

In step (S1), a salt coating layer is formed on one surface of a lithium thin film. In order to form the salt coating layer, a coating solution for forming a salt coating layer may be prepared, and then, it may be applied to the one surface of the lithium thin film and then dried.

The coating solution for forming the salt coating layer may be prepared by dissolving the lithium salt and the additive in a solvent. The types of the lithium salt and the additive are the same as described above. The content of the solvent may be 60 to 80% by weight based on the total weight of the coating solution, and the coating solution may be prepared using a solvent sufficient to smoothly proceed with the coating process.

In addition, the coating is not particularly limited as long as it is a coating method generally used to form a coating layer. For example, the coating method for forming the coating layer may be selected from the group consisting of a bar coating method, a roll coating method, a spin coating method, a slit coating method, a die coating method, a blade coating method, a comma coating method, a slot die coating method, a lip coating method and a solution casting method. Considering the coating efficiency on the lithium thin film, the salt coating layer may be formed by the bar coating method.

In addition, the drying conditions are not particularly limited as long as the solvent in the coating solution can be removed. For example, the drying temperature may be 20°C to 30°C, and specifically, the drying temperature may be 20°C or more, 22°C or more or 24°C or more and 26°C or less, 28°C or less, or 30°C or less. If the drying temperature is less than 20°C, the solvent contained in the coating solution may not be completely removed. If the drying temperature exceeds 30°C, a crack may occur in the salt coating layer, or a side reaction between the coating solution and lithium may occur. If the drying is performed at room temperature (25°C) and under vacuum, the side reaction between the coating solution and lithium may be prevented.

In step (S2), a plurality of the lithium thin films on which the salt coating layer is formed in step (S1) is laminated. In this case, the laminating may be performed in a form in which the salt coating layer is comprised between the lithium thin films.

In this case, the number of the plural means n, and the n may be an integer of 2 to 4. If the number of the lithium thin film is two or more, it is possible to manufacture a negative electrode comprising a structure in which a salt coating layer is formed between lithium thin films. If the number of the lithium thin film exceeds 4, the thickness of the negative electrode may be increased and thus energy density may be decreased.

In step (S3), another lithium thin film is laminated on the salt coating layer that is exposed at the outermost layer of the laminate obtained in step (S2). In this case, the another lithium thin film means a lithium thin film on which a salt coating layer is not formed. By laminating the another lithium thin film, and then, rolling and combining, a negative electrode comprising a laminate in which a salt coating layer is formed between a plurality of lithium thin films can be manufactured.

At this time, the method for rolling is not particularly limited as long as it is a method generally used for combining a film or a layer. For example, the rolling may be performed by applying a pressure sufficient to allow each layer to be sufficiently combined, and the pressure may be 0.8 Mpa to 15 Mpa.

In addition, when using a lithium thin film attached to the negative electrode current collector, the negative electrode can be manufactured using a negative electrode current collector having a lithium thin film formed on both sides (lithium/current collector/lithium) and a lithium thin film having a salt coating layer formed on one side (salt coating layer/lithium). For example, the negative electrode may be manufactured by laminating the salt coating layer of the lithium thin film on which the salt coating layer is formed so as to be in contact with the lithium thin film formed on both sides of the negative electrode current collector (lithium/salt coating layer-lithium/current collector/lithium-salt coating layer/lithium).

At this time, the current collector used as a negative electrode current collector for lithium secondary battery is not particularly limited, and for example, the negative electrode current collector may be copper, nickel, tin, lead, or stainless steel.

### Lithium secondary battery

The present disclosure also relates to a lithium secondary battery comprising a positive electrode, a negative electrode, a separator disposed therebetween, and an electrolyte solution, wherein the negative electrode is as described above.

In the present disclosure, the positive electrode comprises a positive electrode active material layer formed on the positive electrode current collector. The positive electrode active material layer may comprise a positive electrode active material, a binder, and an electrically conductive material.

The loading amount of the positive electrode may be 3.0 mAh/cm² to 5.0 mAh/cm² in consideration of the stable lifetime characteristics of the battery.

In addition, the porosity of the positive electrode may be 60% to 80%.

The positive electrode current collector is all possible as long as it can be used as a current collector in the present technical field, and specifically, it is preferable to use foamed aluminum, foamed nickel, or the like having excellent conductivity.

The positive electrode active material may comprise elemental sulfur (S₈), a sulfur-based compound, or a mixture thereof. The sulfur-based compound may specifically comprise Li₂Sₙ(n≥1), an organic sulfur compound, a carbon-sulfur polymer ((C₂Sₓ)n: x=2.5 ~ 50, n≥2) or the like. In the case of these sulfur materials, since they do not have electrical conductivity alone, they are applied in combination with an electrically conductive material. The positive electrode active material may be contained in an amount of 50 to 90% by weight, based on the total weight of the positive electrode active material layer.

The electrically conductive material may be porous. Therefore, the electrically conductive material may be used without limitation as long as it has porosity and conductivity, for example, a carbon-based material having porosity may be used. As the carbon-based material, carbon black, graphite, graphene, activated carbon, carbon fiber, or the like may be used. In addition, metallic fibers, such as a metal mesh; metallic powders such as copper, silver, nickel, and aluminum; or organic conductive materials such as polyphenylene derivatives can also be used. The electrically conductive materials described above may be used alone or in combination. The electrically conductive material may be contained in an amount of 1 to 30% by weight, based on the total weight of the positive electrode active material layer.

The positive electrode may further comprise a binder for binding the positive electrode active material and the conductive material and for binding to the current collector. The binder may comprise a thermoplastic resin or a thermosetting resin. For example, as the binder, polyethylene, polyethylene oxide, polypropylene, polytetrafluoroethylene (PTEE), polyvinylidene fluoride (PVDF), styrene-butadiene rubber, tetrafluoroethylene-perfluoroalkyl vinyl ether copolymer, vinylidene fluoride-hexafluoropropylene copolymer, vinylidene fluoride-chlorotrifluoroethylene copolymer, ethylene-tetrafluoroethylene copolymer, polychlorotrifluoroethylene, vinylidene fluoride-pentafluoropropylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethyl vinyl ether-tetrafluoroethylene copolymer, and ethylene-acrylic acid copolymer and the like may be used alone or in combination, but it is not necessarily limited thereto, and any binder that can be used as a binder in the art may be used. The binder may be contained in an amount of 1 to 30% by weight, based on the total weight of the positive electrode active material layer.

The positive electrode as described above can be prepared by a conventional method, and specifically, the positive electrode may be manufactured by coating and drying a composition for forming the positive electrode active material layer prepared by mixing the positive electrode active material, the electrically conductive material and the binder in a solvent, onto the current collector, and optionally compression-molding it onto the current collector to improve the electrode density. At this time, the solvent may be water or an organic solvent, and as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like are exemplified.

In the present disclosure, the separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Specifically, a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, etc. may be used alone or by laminating them. In addition, a conventional porous nonwoven fabric, for example, a nonwoven fabric made of high melting point glass fiber, polyethylene terephthalate fiber, etc. may be used, but is not limited thereto.

In the present disclosure, the electrolyte is a non-aqueous electrolyte containing a lithium salt, and includes a lithium salt, an additive, and a solvent, and a non-aqueous organic solvent may be used as the solvent.

The lithium salt of the present disclosure is a material that is dissolved well in a non-aqueous organic solvent, and may be, for example, at least one selected from the group consisting of LiCl, LiBr, LiI, LiClO₄, LiBF₄, LiB₁₀Cl₁₀, LiB(Ph)₄, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, lithium chloroborane, lithium lower aliphatic carboxylate, lithium tetraphenyl borate, and imide.

The concentration of the lithium salt may be 0.2 to 2 M, preferably 0.6 to 2 M, more preferably, 0.7 to 1.7 M, depending on various factors such as the exact composition of the electrolyte, the solubility of the salt, the conductivity of the dissolved salt, the charging and discharging conditions of the battery, the operating temperature and other factors known in the lithium battery field. If the concentration of the lithium salt is less than 0.2 M, the conductivity of the electrolyte solution may be lowered and thus the performance of the electrolyte solution may be deteriorated. If the concentration of the lithium salt exceeds 2 M, the viscosity of the electrolyte solution may increase and thus the mobility of the lithium ion (Li⁺) may be reduced.

The non-aqueous organic solvent should dissolve the lithium salt well, and the non-aqueous organic solvent of the present disclosure may comprise, for example, aprotic organic solvents such as N-methyl-2-pyrrolidinone, propylene carbonate, ethylene carbonate, butylene carbonate, dimethyl carbonate, diethyl carbonate, ethyl methyl carbonate, gamma-butyrolactone, 1,2-dimethoxyethane, 1,2-diethoxyethane, tetrahydroxy franc, 2-methyl tetrahydrofuran, dimethylsulfoxide, 1,3-dioxolane, 4-methyl-1,3-dioxen, diethylether, formamide, dimethylformamide, dioxolane, acetonitrile, nitromethane, methyl formate, methyl acetate, phosphate triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate, and these organic solvents can be used in a mixture of one or two or more solvents thereof.

In the present disclosure, the lithium secondary battery may be a lithium-sulfur secondary battery containing sulfur as a positive electrode active material.

The positive electrode, separator, and electrolyte included in the lithium-sulfur secondary battery can be prepared according to conventional components and manufacturing methods, respectively, and there is no particular limitation on the external shape of the lithium-sulfur secondary battery, but may be cylindrical using a can, rectangular, pouch type or coin type.

Hereinafter, preferred examples of the present disclosure will be described in order to facilitate understanding of the present disclosure.

### Example 1

### (1) Preparation of lithium foil formed with salt coating layer

LiFSI and LiNO₃ were dissolved in a 1,2-dimethoxyethane solvent to prepare a coating solution for forming a salt coating layer. At this time, the coating solution was prepared such that the weight ratio of LiFSI and LiNO₃ was 48:52, and the solvent was 69 wt.% based on the total weight of the coating solution.

Using a bar coater, the coating solution was coated on a lithium foil having a thickness of 45 *µ*m, and then dried at room temperature (25°C) and vacuum conditions to remove the solvent, thereby forming a salt coating layer.

### (2) Manufacture of negative electrode

On the lithium foil on which the salt coating layer was formed, another lithium foil of the same thickness on which the salt coating layer was not formed was laminated, and then rolled to prepare a negative electrode. The negative electrode includes a laminate structure in which a lithium foil, a salt coating layer, and a lithium foil are sequentially laminated (45 *µ*m Li/salt coating layer/45 *µ*m Li).

### (3) Manufacture of lithium-sulfur secondary battery

A sulfur-carbon composite (S-CNT), an electrically conductive material, and a binder are mixed in a weight ratio of 90:5:5, and then, mixed with water as a solvent to prepare a slurry, and then the slurry was then coated on aluminum foil, dried and rolled to manufacture a positive electrode. At this time, vapor grown carbon fiber (VGCF) was used as the electrically conductive material, and styrene butadiene rubber (SBR) was used as the binder. In addition, the coating was performed using a doctor blade, and the slurry was coated with the doctor blade and rolled to prepare a positive electrode. In addition, by the rolling, the porosity of the positive electrode was to be 70%.

An electrolyte was prepared by dissolving 0.75M LiFSI and 5.0 wt.% of LiNO₃ in a mixed solvent of 2-methylfuran and dimethoxyethane (2ME:DME = 2:8 (v/v)).

A porous polyethylene separator having a thickness of 20 *µ*m and a porosity of 45% is interposed between the positive electrode and the negative electrode to prepare an electrode assembly, the electrode assembly was placed inside the case, and then the electrolyte solution was injected into the case to prepare a lithium-sulfur secondary battery.

### Example 2

A lithium-sulfur secondary battery was prepared in the same way as in Example 1, except that a lithium foil with a thickness of 30 *µ*m is used instead of the lithium foil with the thickness of 45 *µ*m, and two layers of salt coating layers are laminated between the three layers of lithium foils (30 *µ*m Li/salt coating layer/30 *µ*m Li/salt coating layer/30 *µ*m Li).

### Comparative Example 1

A lithium negative electrode and a lithium-sulfur secondary battery comprising the same were prepared in the same manner as in Example 1, except that a single lithium foil with a thickness of 90 *µ*m without the salt coating layer is formed.

### Comparative Example 2

Without using LiNO₃ as an additive, 2 g of polyethylene oxide (PEO, Mw = 100,000) and 1.303 g of LiTFSI were mixed in an acetonitrile solvent to prepare a coating solution. The concentration of the coating solution was set to be 10 wt.% based on the concentration of the solid content. At this time, a lithium negative electrode and a lithium-sulfur secondary battery comprising the same were prepared in the same manner as in Example 1, except that a polymer coating layer is formed by coating the coating solution to a thickness of 30 um on lithium foil by a bar coating method.

### Experimental example 1: Performance experiment of the battery

For the lithium-sulfur secondary batteries of Example 1 and Comparative Example 1, charging/discharging were performed, and then the excess compared to the injected electrolyte solution, initial capacity, 0.1C discharging nominal voltage, and lifetime characteristics were measured. The results are shown in Table 1 below. The charging/discharging was performed by 0.1C/0.1C charging/discharging three times, 0.2C/0.2C charging/discharging three times, and 0.2C/0.3C charging/discharging at 25°C under 1.8V-2.5V cut-off conditions. The charging/discharging result was measured using a charging/discharging measuring device (LAND CT-2001A, manufactured by Wuhan company).

In Table 1 below, the excess compared to the injected electrolyte solution means the contents of the lithium salt and the additive contained in the coating layer compared to the injected electrolyte. In addition, the lifetime (Retention 80%, cycle) means the number of cycles at the time when the capacity retention rate of 80% compared to the first discharging capacity of 0.3C is reached.

**Table 1**

| | | Example 1 | Example 2 | Comparative Example 1 |
|---|---|---|---|---|
| Excess compared to the injected electrolyte solution (%) | LiNO₃ | 14 | 44 | 0 |
| | LiFSI | 5 | 15 | 0 |
| Initial capacity (mAh/gₛ) | | 1068 | 1085 | 1107 |
| 0.1C discharging nominal voltage (V) | | 2.143 | 2.143 | 2.151 |
| Lifetime (Retention 80%, cycle) | | 93 | 109 | 81 |

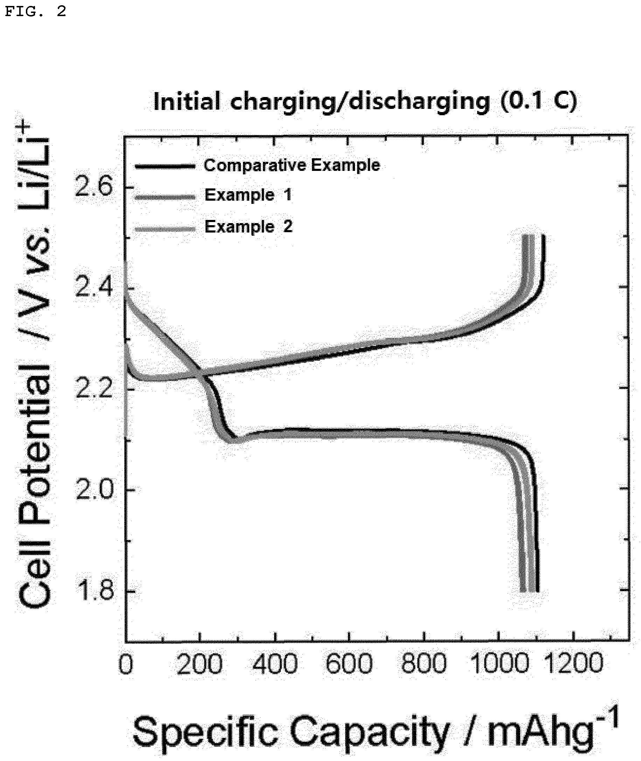

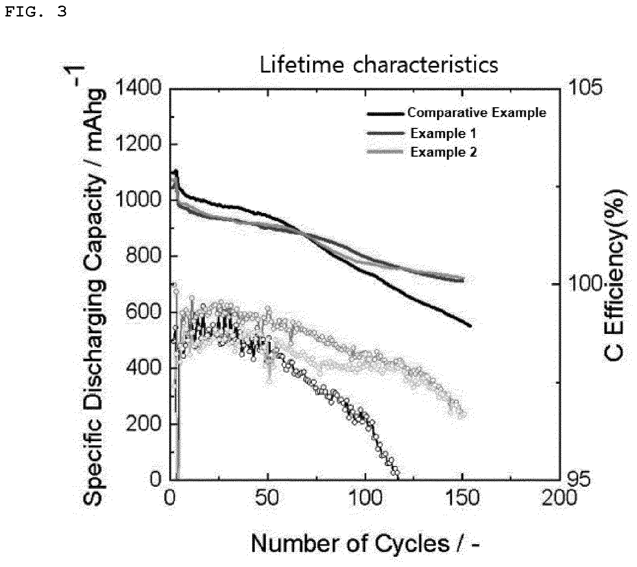

As shown in Table 1, and FIGs. 2 and 3, it can be seen that the lithium-sulfur secondary batteries of Example 1 and Example 2 have the equivalent level of initial capacity and nominal voltage as compared to the lithium-sulfur secondary battery of Comparative Example 1, and exhibit excellent coulombic efficiency and lifetime performance.

### Experimental example 2: Experiment for leaching evaluation of polymer coating layer and salt coating layer

For experiments for the leaching evaluation of the polymer coating layer and the salt coating layer, the polymer coating layer and the salt coating layer of Comparative Example 2 and Example 2 were used as Sample 1 and Sample 2, respectively, and a leaching experiment was performed as follows:
Sample 1: A polymer coating layer formed on a lithium foil
Sample 2: A salt coating layer formed on a lithium foil.

In the process of preparing Samples 1 and 2 above, bare Li (g), weight (g) after coating, weight (g) of the coating layer, and weight (g) after immersion in a solvent were measured to confirm the leaching amount of the coating layer. At this time, the immersion time was divided into 10 minutes (10 min), 1 hour (1 hr), and 1 day (1 d), respectively to carry out the experiment. At this time, the weight after coating means the sum of the weight of the bare Li and the coating layer, and the coated Li thin film is immersed in a solvent for a specific time, and then taken it out and dried, and then the weight is measured. The leaching rate of the coating layer was calculated by Equation 1 below. (Wight after coating - Weight after immersion in solvent) / (Weight after coating - Weight of bare Li)

**Table 2**

| Sample 1 | Immersion time | | |
|---|---|---|---|
| | 10 min | 1hr | 1d |
| Bare Li (g) | 0.0027 | 0.0027 | 0.0027 |
| Weight after coating (g) | 0.0032 | 0.00336 | 0.00329 |
| Weight of coating layer (g) | 0.0005 | 0.00066 | 0.00059 |
| Weight of LiFSI in coating layer (g) | 0.000197288 | 0.000260421 | 0.0002328 |
| Weight after immersion in solvent (g) | 0.00269 | 0.00273 | 0.00263 |
| Leaching rate of coating layer (%) | 102 | 95 | 112 |

**Table 3**

| Sample 2 | Immersion time | | |
|---|---|---|---|
| | 10 min | 1hr | 1d |
| Bare Li (g) | 0.0027 | 0.0027 | 0.0027 |
| Weight after coating (g) | 0.00594 | 0.0061 | 0.0068 |
| Weight of coating layer (g) | 0.00324 | 0.0034 | 0.0041 |
| Weight of LiNO₃ in coating layer (g) | 0.001564963 | 0.001642245 | 0.001980354 |
| Weight of LiFSI in | 0.001675037 | 0.001757755 | 0.002119646 |
| coating layer (g) | | | |
| Weight after immersion in solvent (g) | 0.00527 | 0.00536 | 0.00528 |
| Leaching rate of coating layer (%) | 21 | 22 | 37 |

As shown in Tables 2 and 3, it was confirmed that in the case of Sample 1, the entire polymer coating layer is desorbed into the solvent within 10 minutes, whereas in the case of Sample 2, the salt contained in the salt coating layer is gradually dissolved into the solvent.

From this, it can be seen that if the salt coating layer is applied to a lithium negative electrode, it can serve to supply salt to the electrolyte for a long time compared to the polymer coating layer, which will be advantageous for improving the performance and lifetime characteristics of the battery.

### [Description of Reference Numerals]

10a, 10b: Lithium foil
20: Salt coating layer
P: Pore

## Claims

1. A negative electrode for a lithium secondary battery, the negative electrode comprising:
a plurality of lithium thin films; and
a salt coating layer formed between the plurality of lithium thin films,
wherein the salt coating layer comprises a lithium salt and an additive,
wherein the lithium salt comprises one or more selected from the group consisting of LiN(C₂F₅SO₂)₂(Lithium bis(perfluoroethylsulfonyl)imide, LiBETI), LiN (C₂F₅SO₃)₂, LiN(FSO₂)₂(Lithium bis(fluorosulfonyl)imide, LiFSI), LiN(CF₃SO₂)₂(Lithium bis(trifluoromethanesulfonyl)imide, LiTFSI), LiPF₆, LiClO₄, LiAsF₆, LiBF₄, LiSbF₆, LiAlO₄, LiAlCl₄, LiCF₃SO₃, and LiC₄F₉SO₃,
wherein the additive comprises one or more selected from the group consisting of an inorganic nitric acid compound and an organic nitric acid compound,
wherein the inorganic nitric acid compound includes one or more selected from the group consisting of lithium nitrate (LiNO₃) and lithium nitrite (LiNO₂), and
wherein the organic nitric acid compound includes one or more selected from the group consisting of nitromethane (CH₃NO₂) and methyl nitrate (CH₃NO₃).

2. The negative electrode according to claim 1, wherein the salt coating layer comprises 40 to 80 wt.% of the lithium salt and 20 to 60 wt.% of the additive.

3. The negative electrode according to claim 1, wherein the salt coating layer has a thickness of 100 nm to 3 *µ*m.

4. The negative electrode according to claim 1, wherein the lithium thin film has a thickness of 10 *µ*m to 50 *µ*m.

5. The negative electrode according to claim 1, wherein the lithium thin film is porous.

6. The negative electrode according to claim 1, wherein a number of the plurality of lithium thin films is 2 to 4.

7. A method for manufacturing a negative electrode for a lithium secondary battery, the method comprising:
(S1) forming a salt coating layer on one surface of a lithium thin film;
(S2) laminating a plurality of the lithium thin films on which the salt coating layer is formed in step (S1) to form a laminate; and
(S3) laminating another lithium thin film on the salt coating layer that is exposed at the outermost layer of the laminate obtained in step (S2),
wherein the salt coating layer comprises a lithium salt and an additive,
wherein the lithium salt comprises one or more selected from the group consisting of LiN(C₂F₅SO₂)₂(Lithium bis(perfluoroethylsulfonyl)imide, LiBETI), LiN (C₂F₅SO₃)₂, LiN(FSO₂)₂(Lithium bis(fluorosulfonyl)imide, LiFSI), LiN(CF₃SO₂)₂(Lithium bis(trifluoromethanesulfonyl)imide, LiTFSI), LiPF₆, LiClO₄, LiAsF₆, LiBF₄, LiSbF₆, LiAlO₄, LiAlCl₄, LiCF₃SO₃, and LiC₄F₉SO₃,
wherein the additive comprises one or more selected from the group consisting of an inorganic nitric acid compound and an organic nitric acid compound,
wherein the inorganic nitric acid compound includes one or more selected from the group consisting of lithium nitrate (LiNO₃) and lithium nitrite (LiNO₂), and
wherein the organic nitric acid compound includes one or more selected from the group consisting of nitromethane (CH₃NO₂) and methyl nitrate (CH₃NO₃).

8. A lithium secondary battery comprising:
the negative electrode of claim 1;
a positive electrode;
a separator between the positive electrode and the negative electrode; and
an electrolyte with which the positive electrode, the negative electrode, and the separator are impregnated.

9. The lithium secondary battery according to claim 8, wherein the lithium secondary battery is a lithium-sulfur secondary battery.

## Patentansprüche

1. Negative Elektrode für eine Lithium-Sekundärbatterie, wobei die negative Elektrode umfasst:
eine Vielzahl von Lithium-Dünnfilmen; und
eine Salzbeschichtungsschicht, die zwischen der Vielzahl von Lithium-Dünnfilmen ausgebildet ist,
wobei die Salzbeschichtungsschicht ein Lithiumsalz und ein Additiv umfasst,
wobei das Lithiumsalz eines oder mehrere ausgewählt aus der Gruppe bestehend aus LiN(C₂F₅SO₂)₂(Lithiumbis(perfluorethylsulfonyl)imid, LiBETI), LiN (C₂F₅SO₃)₂, LiN(FSO₂)₂(Lithiumbis(fluorsulfonyl) imid, LiFSI), LiN(CF₃SO₂)₂(Lithiumbis(trifluormethansulfonyl)imid, LiTFSI), LiPF₆, LiClO₄, LiAsF₆, LiBF₄, LiSbF₆, LiAlO₄, LiAlCl₄, LiCF₃SO₃ und LiC₄F₉SO₃ umfasst,
wobei das Additiv eines oder mehrere ausgewählt aus der Gruppe bestehend aus einer anorganischen Salpetersäureverbindung und einer organischen Salpetersäureverbindung umfasst,
wobei die anorganische Salpetersäureverbindung eines oder mehrere ausgewählt aus der Gruppe bestehend aus Lithiumnitrat (LiNO₃) und Lithiumnitrit (LiNO₂) umfasst, und
wobei die organische Salpetersäureverbindung eines oder mehrere ausgewählt aus der Gruppe bestehend aus Nitromethan (CH₃NO₂) und Methylnitrat (CH₃NO₃) umfasst.

2. Negative Elektrode nach Anspruch 1, wobei die Salzbeschichtungsschicht 40 bis 80 Gew.-% des Lithiumsalzes und 20 bis 60 Gew.-% des Additivs umfasst.

3. Negative Elektrode nach Anspruch 1, wobei die Salzbeschichtungsschicht eine Dicke von 100 nm bis 3 *µ*m aufweist.

4. Negative Elektrode nach Anspruch 1, wobei der Lithium-Dünnfilm eine Dicke von 10 *µ*m bis 50 *µ*m aufweist.

5. Negative Elektrode nach Anspruch 1, wobei der Lithium-Dünnfilm porös ist.

6. Negative Elektrode nach Anspruch 1, wobei eine Anzahl der Vielzahl von Lithium-Dünnfilmen 2 bis 4 beträgt.

7. Verfahren zur Herstellung einer negativen Elektrode für eine Lithium-Sekundärbatterie, wobei das Verfahren umfasst:
(S1) Ausbilden einer Salzbeschichtungsschicht auf einer Oberfläche eines Lithium-Dünnfilms;
(S2) Laminieren einer Vielzahl der Lithium-Dünnfilme, auf denen die Salzbeschichtungsschicht in Schritt (S1) ausgebildet ist, um ein Laminat auszubilden; und
(S3) Laminieren eines weiteren Lithium-Dünnfilms auf die Salzbeschichtungsschicht, die an der äußersten Schicht des in Schritt (S2) erhaltenen Laminats freiliegt,
wobei die Salzbeschichtungsschicht ein Lithiumsalz und ein Additiv umfasst,
wobei das Lithiumsalz eines oder mehrere ausgewählt aus der Gruppe bestehend aus LiN(C₂F₅SO₂)₂(Lithiumbis(perfluorethylsulfonyl)imid, LiBETI), LiN(C₂F₅SO₃)₂, LiN(FSO₂)₂(Lithiumbis (fluorsulfonyl) imid, LiFSI), LiN(CF₃SO₂)₂(Lithiumbis(trifluormethansulfonyl)imid, LiTFSI), LiPF₆, LiClO₄, LiAsF₆, LiBF₄, LiSbF₆, LiAlO₄, LiAlCl₄, LiCF₃SO₃ und LiC₄F₉SO₃ umfasst,
wobei das Additiv eines oder mehrere ausgewählt aus der Gruppe bestehend aus einer anorganischen Salpetersäureverbindung und einer organischen Salpetersäureverbindung umfasst,
wobei die anorganische Salpetersäureverbindung eines oder mehrere ausgewählt aus der Gruppe bestehend aus Lithiumnitrat (LiNO₃) und Lithiumnitrit (LiNO₂) umfasst, und
wobei die organische Salpetersäureverbindung eines oder mehrere ausgewählt aus der Gruppe bestehend aus Nitromethan (CH₃NO₂) und Methylnitrat (CH₃NO₃) umfasst.

8. Lithium-Sekundärbatterie, umfassend:
die negative Elektrode nach Anspruch 1;
eine positive Elektrode;
einen Separator zwischen der positiven Elektrode und der negativen Elektrode; und
einen Elektrolyten, mit dem die positive Elektrode, die negative Elektrode und der Separator imprägniert sind.

9. Lithium-Sekundärbatterie nach Anspruch 8, wobei die Lithium-Sekundärbatterie eine Lithium-Schwefel-Sekundärbatterie ist.

## Revendications

1. Électrode négative pour une batterie rechargeable au lithium, l'électrode négative comprenant :
une pluralité de films minces de lithium ; et
une couche de revêtement de sel formée entre la pluralité de films minces de lithium,
dans laquelle la couche de revêtement de sel comprend un sel de lithium et un additif,
dans laquelle le sel de lithium comprend un ou plusieurs éléments sélectionnés dans le groupe constitué de LiN(C₂F₅SO₂)₂(Lithium bis(perfluoroéthylsulfonyl)imide, LiBETI), LiN(C₂F₅SO₃)₂, LiN(FSO₂)₂(Lithium bis(fluorosulfonyl)imide, LiFSI), LiN(CF₃SO₂)₂(Lithium bis(trifluorométhanesulfonyl)imide, LiTFSI), LiPF₆, LiClO₄, LiAsF₆, LiBF₄, LiSbF₆, LiAlO₄, LiAlCl₄, LiCF₃SO₃, et LiC₄F₉SO₃,
dans laquelle l'additif comprend un ou plusieurs éléments sélectionnés dans le groupe constitué d'un composé d'acide nitrique inorganique et d'un composé d'acide nitrique organique,
dans laquelle le composé d'acide nitrique inorganique inclut un ou plusieurs éléments sélectionnés dans le groupe constitué de nitrate de lithium (LiNO₃) et nitrure de lithium (LiNO₂), et
dans laquelle le composé d'acide nitrique organique inclut un ou plusieurs éléments sélectionnés dans le groupe constitué de nitrométhane (CH₃NO₂) et nitrate de méthyle (CH₃NO₃).

2. Électrode négative selon la revendication 1, dans laquelle la couche de revêtement de sel comprend 40 à 80 % en poids du sel de lithium et 20 à 60 % en poids de l'additif.

3. Électrode négative selon la revendication 1, dans laquelle la couche de revêtement de sel a une épaisseur de 100 nm à 3 µm.

4. Électrode négative selon la revendication 1, dans laquelle le film mince de lithium a une épaisseur de 10 µm à 50 µm.

5. Électrode négative selon la revendication 1, dans laquelle le film mince de lithium est poreux.

6. Électrode négative selon la revendication 1, dans laquelle un nombre de la pluralité de films minces de lithium est 2 à 4.

7. Procédé de fabrication d'une électrode négative pour une batterie rechargeable au lithium, le procédé consistant à :
(S1) former une couche de revêtement de sel sur une surface d'un film mince de lithium ;
(S2) stratifier une pluralité des films minces de lithium sur lesquels la couche de revêtement de sel est formée à l'étape (S1) pour former un stratifié ; et
(S3) stratifier un autre film mince de lithium sur la couche de revêtement de sel qui est exposée à la couche la plus extérieure du stratifié obtenue à l'étape (S2),
dans laquelle la couche de revêtement de sel comprend un sel de lithium et un additif,
dans laquelle le sel de lithium comprend un ou plusieurs éléments sélectionnés dans le groupe constitué de LiN(C₂F₅SO₂)₂(Lithium bis(perfluoroéthylsulfonyl)imide, LiBETI), LiN(C₂F₅SO₃)₂, LiN(FSO₂)₂(Lithium bis(fluorosulfonyl)imide, LiFSI), LiN(CF₃SO₂)₂(Lithium bis(trifluorométhanesulfonyl)imide, LiTFSI), LiPF₆, LiClO₄, LiAsF₆, LiBF₄, LiSbF₆, LiAlO₄, LiAlCl₄, LiCF₃SO₃ et LiC₄F₉SO₃,
dans laquelle l'additif comprend un ou plusieurs éléments sélectionnés dans le groupe constitué d'un composé d'acide nitrique inorganique et d'un composé d'acide nitrique organique,
dans laquelle le composé d'acide nitrique inorganique inclut un ou plusieurs éléments sélectionnés dans le groupe constitué de nitrate de lithium (LiNO₃) et nitrure de lithium (LiNO₂), et
dans laquelle le composé d'acide nitrique organique inclut un ou plusieurs éléments sélectionnés dans le groupe constitué de nitrométhane (CH₃NO₂) et nitrate de méthyle (CH₃NO₃).

8. Batterie rechargeable au lithium comprenant :
l'électrode négative selon la revendication 1 ;
une électrode positive ;
un séparateur entre l'électrode positive et l'électrode négative ; et
un électrolyte avec lequel l'électrode positive, l'électrode négative et le séparateur sont imprégnés.

9. Batterie rechargeable au lithium selon la revendication 8, dans laquelle la batterie rechargeable au lithium est une batterie rechargeable au lithium-soufre.
